# EUROPÄISCHE PATENTSCHRIFT

(11) **EP 2 823 711 B1**
(45) Veröffentlichungstag und Bekanntmachung des Hinweises auf die Patenterteilung: **22.06.2016**
(21) Anmeldenummer: 14173632.2
(22) Anmeldetag: 24.06.2014
(51) Int. Cl.: A22C 15/00

(54) **VORRICHTUNG ZUM ZUFÜHREN VON SCHLAUFEN UND CLIPS**
DEVICE FOR FEEDING LOOPS AND CLIPS
DISPOSITIF DE CONDUITE DE BOUCLES ET CLIPS

(30) Priorität: 02.07.2013 DE 202013005916 U
(43) Veröffentlichungstag der Anmeldung: 14.01.2015
(73) Patentinhaber: Tipper Tie technopack GmbH, 21509 Glinde (DE)
(72) Erfinder: Aderhold, Uwe, 21529 Kröppelshagen (DE)
(74) Vertreter: Glawe, Delfs, Moll

(56) Entgegenhaltungen:
- EP-A1- 0 413 166
- DE-U1-202009 007 886
- DE-U1-202009 007 887
- US-A- 5 067 313
- US-A1- 2005 060 880

## Beschreibung

Die Erfindung betrifft eine Vorrichtung nach dem Oberbegriff des Patentanspruchs 1.

Clipmaschinen kommen insbesondere in der Wurstherstellung zum Einsatz, um die Wurstenden mittels Clips zu verschließen. Hierfür müssen die Clips entlang einer Bewegungsbahn zur Verschlussstelle transportiert werden. Diese Bewegungsbahn kann beispielsweise durch ein Zuführkanal oder auch eine innerhalb der Maschine bewegliche Transporteinheit für die Clips definiert sein (vgl. US 3,377,692, EP 2 258 622 B1).

Wenn die Würste aufgehängt werden sollen, müssen Schlaufen zum Aufhängen in den Clipverschluss eingebracht werden. Hierzu ist es bekannt, die Schlaufen in die Bewegungsbahn für die Clips einzubringen, damit sie vom Clip erfasst und zur Verschlussposition mitgenommen werden. Dies erfolgt im Stand der Technik mittels gesonderter, ebenfalls entlang der Bewegungsbahn der Clips angeordneter Schlaufenzufuhreinrichtungen (z. B. US 5,067,313).

Solche Schlaufenzufuhreinrichtungen sind allerdings ein Hemmnis für die Geschwindigkeit der Clipmaschinen. Denn die Bewegungsbahn der Clips verlängert sich notwendigerweise um den Abschnitt, der für die Anordnung der Schlaufenzufuhreinrichtung zur Verfügung stehen muss.

Die Erfindung möchte daher den Platzbedarf der Schlaufenzufuhreinrichtung an der Bewegungsbahn minimieren, so dass diese möglichst kurz ausgeführt werden kann. Sie löst diese Aufgabe durch die Merkmale des Patentanspruchs 1. Die Unteransprüche betreffen vorteilhafte Weiterbildungen der Erfindung.

Bei herkömmlichen Clipmaschinen ist die Bewegungsbahn meist durch einen im Regelfall linearen Zuführkanal gebildet, durch den der Clip geschoben wird. Bekannt sind aber auch Transporteinheiten, in die ein Clip eingeschoben wird und die sich dann mit ihm in Richtung der Verschlussstelle bewegen. Diese Transporteinheiten können linear (z. B. US 3,237,290) oder anderweitig bewegt, z. B. geschwenkt (EP 2 258 622 B1), werden. In jedem Fall bildet diejenige Bahn die der Clip vom Magazin zur Verschlussstelle zurücklegt, die Bewegungsbahn.

Eine erfindungsgemäße Magazinstange hat im Regelfall eine Längserstreckung, entlang derer die Clips aufgereiht werden können. Die Querschnittsform ist grundsätzlich beliebig und kann entlang der Längserstreckung variieren, solange die Clipschenkel die Stange umgreifen können. Die Stange kann Krümmungen aufweisen und weist i. d. R. eine auf, entlang derer die Clips von einer im Wesentlichen senkrechten Erstreckung der Stange in einen im Wesentlichen waagerechten Abschnitt einlaufen. Die Clips im senkrechten Abschnitt drücken durch ihr Eigengewicht auf die vorlaufenden Clips auf dem waagerechten Abschnitt, so dass sie diese in Richtung der Bewegungsbahn vortreiben, so dass ggf. auf ein gesondertes Förderorgan für die Clips verzichtet werden kann.

Als Mittel zum Festlegen der Winkellage der Clips in Ebenen senkrecht zum Verlauf der Magazinstange kommt vornehmlich die Form der Außenwandung in Betracht. Insbesondere wenn deren Profil zwei parallele bis maximal um 10° divergierende Seitenlinien umfasst, an die sich parallele oder ebenfalls leicht divergierende Clipschenkel von außen anlegen können, wird damit die Winkellage des Clips festgelegt. Auf diese Weise legt die Magazinstange selbst die Winkellage fest, so dass die gesamte Vorrichtung nur durch die Magazinstange gebildet werden kann. Legt die Stange die Winkellage hingegen nicht fest, können zusätzliche Komponenten wie insbesondere Halteschienen, etwa in Form von am Cliprücken anliegenden, ggf. gekrümmten Flachprofilen, die Mittel zum Festlegen der Winkellage bilden (vgl. EP 2 042 436 B1).

Ein Luftkanal wird durch einen Hohlraum gebildet, der zwei Öffnungen für den Eintritt und den Austritt einer Schlaufe aufweist und im Übrigen hinreichend abgedichtet ist, so dass sich zwischen den Öffnungen ein Luftstrom ausbilden kann, der die Schlaufe von der einen Öffnung zur anderen fördert. Vorzugsweise ist der Luftkanal geradlinig, so dass sich die beiden Öffnungen gegenüber liegen.

Nach der Erfindung verläuft der Luftkanal zumindest im Kanalabschnitt unmittelbar vor der Bewegungsbahn für Clips innerhalb der Magazinstange. Die Erfindung beruht damit auf der Erkenntnis, dass die Magazinstange selbst zur Bildung des Hohlraums eingesetzt werden kann. Statt also zu versuchen, den jeweiligen Platzbedarf von Magazin und Schlaufenübergabe zu minimieren, so dass beide Komponenten so nah beieinander wie möglich angeordnet werden können, werden beide miteinander kombiniert. Hierdurch wird der Luftkanal zumindest an der Übergabeposition der Schlaufen so dicht wie möglich an die Übergabestelle für die Clips vom Magazin in die Bewegungsbahn verlegt. Auf diese Weise erreicht die Erfindung, dass die Bewegungsbahn für die Clips durch das Vorhandensein einer Schlaufenzufuhr praktisch nicht verlängert wird. Die Maschinen können genauso schnell arbeiten wie solche, bei denen zur Verkürzung der Bewegungsbahn auf eine Schlaufenzufuhr verzichtet wurde.

Schlaufen für die Erfindung sind bevorzugt solche, die zum Aufhängen von Würsten und anderen mit Clipverschluss verschlossenen Gegenständen mit mindestens 500g Gewicht geeignet sind.

Vorteilhafterweise befindet sich zumindest ein Teil des Querschnitts des Luftkanals in einem Bereich des Querschnitts der Magazinstange, der sich zwischen den Schenkeln aufgereihter Clips befinden kann. Hierbei kommt es auf den größtmöglichen Clip an, der von der Vorrichtung noch geführt und in die Bewegungsbahn für die Clips übergeben werden kann, also der Sache nach auf die Beschaffenheit der Vorrichtung, insbesondere der Magazinstange. Damit liegt der Luftkanal so dicht unterhalb der Clips, dass sich die gedachte Clipfläche zwischen den Schenkeln und der Kanalquerschnitt überlappen. Noch dichter liegen die Clips und der Kanal beieinander, wenn sich zumindest die Hälfte des Querschnitts des Luftkanals in einem Bereich des Querschnitts der Magazinstange befindet, der sich zwischen den Schenkeln aufgereihter Clips befinden kann. Noch vorteilhafter ist es, wenn sich der gesamte Querschnitt des Luftkanals in einem Bereich des Querschnitts der Magazinstange befindet, der sich zwischen den Schenkeln aufgereihter Clips befinden kann. In diesem Fall ist klar, dass die Anordnung der Schlaufenzufuhr keinerlei zusätzlichen Platzbedarf entlang der Bewegungsbahn verlangt. Außerdem ist der Weg, den der Clip bis zur Erfassung der Schlaufe zurücklegt, minimiert. Dies wiederum minimiert die Gefahr, dass sich das vorlaufende Schlaufenende vor der Erfassung durch den Clip anderweitig verfangen kann.

Der Querschnitt des Luftkanals ist zumindest in einem Abschnitt des Kanals kreisrund, vorzugsweise im Kanalabschnitt unmittelbar vor der Bewegungsbahn. Dies begünstigt eine zentrische Ausrichtung der Schlaufe im Luftkanal. Der Radius des Querschnitts in diesem Abschnitt kann, muss aber nicht konstant sein.

Der Querschnitt des Luftkanals zwischen den beiden Öffnungen hat vorzugsweise über die gesamte Länge des Kanals zumindest in einer Richtung eine Mindestausdehnung von 2,5 mm. Die Höchstausdehnung sollte bevorzugt nicht mehr als 10 mm betragen. Im Fall kreisrunder Querschnitte für den gesamten Kanal oder Kanalabschnitte gelten diese Werte für den Querschnittsdurchmesser.

Vorteilhafterweise ist die Magazinstange zumindest in einem Abschnitt einstückig. Die Konstruktion ist dann einfach und robust. Ferner ist es vorteilhaft, wenn zumindest der Abschnitt der Magazinstange unmittelbar vor der Bewegungsbahn der Clips einstückig ist. Weiter vorzugsweise besteht die ganze Magazinstange entlang ihrer Erstreckung aus einstückigen Abschnitten. Noch weiter vorzugsweise ist die gesamte Magazinstange einstückig. In diesem Sinne bedeutet einstückig, dass der Abschnitt bzw. die Stange aus fest zusammengefügten, insbesondere zusammengeschweißten und/oder gelöteten und/oder geklebten Komponenten besteht. Noch vorteilhafter ist, wenn die einstückige Ausführung eine werkstoffeinstückige ist, bei der das Teil aus einem einzigen Werkstück gefertigt ist. In diesen Fällen kann die gesamte Vorrichtung aus einem einzigen einstückigen oder werkstoffeinstückigen Teil, nämlich der Magazinstange, bestehen.

Zur erfindungsgemäßen Vorrichtung kann auch ein Mittel zur Erzeugung eines Luftstroms im Luftkanal gehören. Diese können durch eine entlang des Luftkanals angeordnete Düse gebildet werden, durch die ein anderweitig erzeugtes Druckgefälle in einen Luftstrom durch den Luftkanal umgewandelt wird, beispielsweise eine Venturidüse. Vorzugsweise ist die Düse an der Eingangsöffnung des Luftkanals angeordnet, da dies das Ansaugen der Schlaufe fördert. Mittel zur Erzeugung des Druckgefälles können ebenfalls zur Vorrichtung gehören, etwa eine Druckluftquelle oder ein Gebläse, ggf. mit zugehörigen Leitungen.

Die Erfindung betrifft auch eine Clipmaschine, die eine Vorrichtung wie vorbeschrieben aufweist. Vorzugsweise umfasst die Clipmaschine auch eine Transporteinheit für Clips. Hierbei ist der Einsatz der Erfindung besonders vorteilhaft, weil die Transporteinheit insgesamt kürzere Wege zurücklegen kann, als wenn noch eine gesonderte Schlaufenzufuhreinrichtung passiert werden müsste.

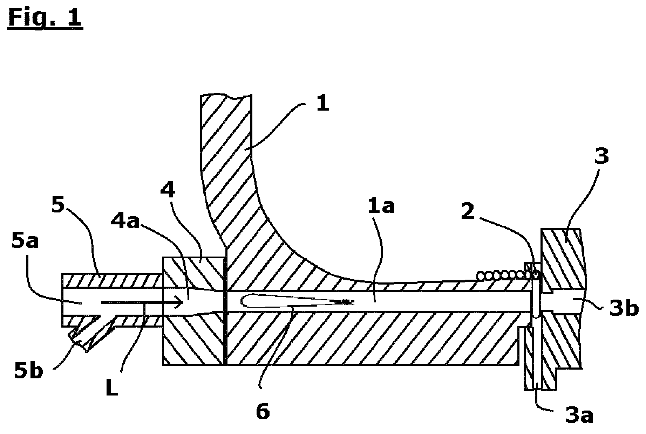

Nachfolgend wird ein Ausführungsbeispiel der Erfindung anhand von Zeichnungen näher erläutert. Dabei zeigen
- Fig. 1:: einen Längsschnitt durch eine erfindungsgemäße Vorrichtung nebst Transporteinheit einer Clipmaschine jeweils in Teilansicht;

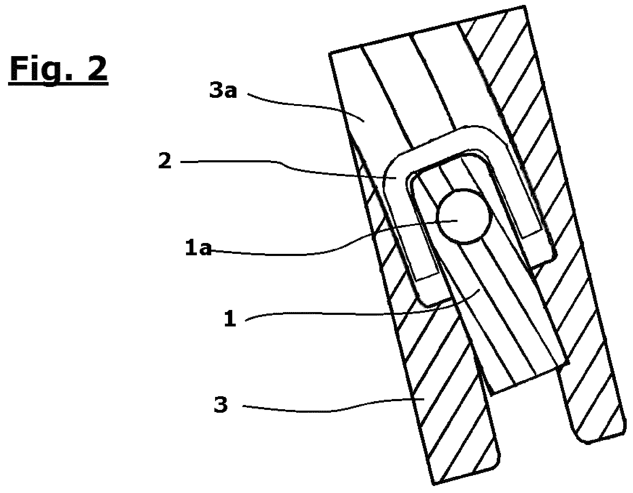

- Fig. 2:: eine Ansicht der Querschnitte der Vorrichtung und der Transporteinheit.

Eine Magazinstange 1 weist einen vertikalen und einen im Wesentlichen horizontalen Abschnitt auf. Auf Letzterem sind im vorderen Abschnitt Clips 2 eingezeichnet, wobei vom vordersten Clip auch die im Wesentlichen senkrecht vom Cliprücken abragenden Schenkel zu erkennen sind (von den übrigen Clips sind nur Querschnitte der Rücken zu sehen; aus Übersichtsgründen wurde auf eine Schraffur verzichtet). Tatsächlich kann die ganze Oberseite der Magazinstange 1 mit Clips 2 belegt sein. Die Clips werden am Ende der Magazinstange in eine Transporteinheit 3 übergeben, in der sie für den Transport zur Verschlussstelle in einer Nut 3a festgeklemmt werden.

Innerhalb der Magazinstange 1 befindet sich ein Luftkanal 1a in Form einer Längsbohrung durch den waagerechten Abschnitt. Dieser ist so angeordnet, dass er sich in Gänze oberhalb der Enden der Clipschenkel befindet. D. h. durch den Kanal 1a können Schlaufen 6 unmittelbar unterhalb der Clips 2 transportiert werden. Für die Aufnahme der Schlaufen kann in der Transporteinheit ein in der Clip-Übernahmestellung der Transporteinheit 3 mit dem Luftkanal 1a fluchtendes Loch 3b vorgesehen sein, etwa eine kreisrunde Bohrung, dessen Querschnittsfläche bzw. Durchmesser vorzugsweise kleiner ist als die bzw. der des Luftkanals 1a. Durch diese Bemessung kann bewirkt werden, dass die Schlaufe in dem Loch 3b stecken bleibt und dadurch fixiert wird. Das Loch 3b geht vorzugsweise durch die gesamte Transporteinheit 3 durch, etwa als Durchgangsbohrung, damit der Luftstrom aufrecht erhalten bleibt. Die Transporteinheit 3 ist Teil einer erfindungsgemäßen Clipmaschine.

Am der Transporteinheit 3 fernen Ende setzt sich der Luftkanal 1a mit einem weiteren Abschnitt 4a fort, der sich in einem Zwischenstück befindet, in dem sich der Luftkanal 4a verjüngt. An das Zwischenstück 4 schließt sich ein Düsenstück 5 an, das ebenfalls einen Kanalabschnitt 5a enthält sowie eine Zuleitung 5b für Druckluft, mit der in Richtung des Pfeils L ein Luftstrom zum Transport der Schlaufen 6 durch den Kanal 1a, 4a, 5a erzeugt wird.

## Patentansprüche

1. Vorrichtung zum Zuführen von Schlaufen (6) und Clips (2) zur Bewegungsbahn für Clips (2) einer Clipmaschine umfassend eine Magazinstange (1), deren Außenwandung so bemessen ist, dass sie von den Schenkeln der Clips (2) übergriffen werden kann, so dass die Clips (2) aufgereiht darauf geführt werden können, Mittel zum Festlegen der Winkellage der Clips in Ebenen senkrecht zum Verlauf der Magazinstange sowie einen Luftkanal (1a, 4a, 5a) zum Transport der Schlaufen (6) sowie **dadurch gekennzeichnet, dass** der Luftkanal (1a, 4a, 5a) zumindest im Kanalabschnitt (1a) unmittelbar vor der Bewegungsbahn für Clips (2) innerhalb der Magazinstange (1) verläuft.

2. Vorrichtung nach Patentanspruch 1, **dadurch gekennzeichnet, dass** sich in besagtem Kanalabschnitt (1a) zumindest ein Teil des Querschnitts des Luftkanals (1a) in einem Bereich des Querschnitts der Magazinstange (1) befindet, der sich zwischen den Schenkeln aufgereihter Clips (2) befinden kann.

3. Vorrichtung nach Patentanspruch 1, **dadurch gekennzeichnet, dass** sich in besagtem Kanalabschnitt zumindest die Hälfte des Querschnitts des Luftkanals (1a) in einem Bereich des Querschnitts der Magazinstange (1) befindet, der sich zwischen den Schenkeln aufgereihter Clips (2) befinden kann.

4. Vorrichtung nach Patentanspruch 1, **dadurch gekennzeichnet, dass** sich in besagtem Kanalabschnitt der gesamte Querschnitt des Luftkanals (1a) in einem Bereich des Querschnitts der Magazinstange (1) befindet, der sich zwischen den Schenkeln aufgereihter Clips (2) befinden kann.

5. Vorrichtung nach einem der vorgenannten Patentansprüche, **dadurch gekennzeichnet, dass** der Querschnitt des Luftkanals (1a, 4a, 5a) zumindest in einem Abschnitt des Kanals (1a, 4a, 5a) kreisrund ist.

6. Vorrichtung nach einem der vorgenannten Patentansprüche, **dadurch gekennzeichnet, dass** die Magazinstange (1) zumindest in einem Abschnitt einstückig ist.

7. Vorrichtung nach Patentanspruch 6, **dadurch gekennzeichnet, dass** zumindest der Abschnitt der Magazinstange (1) unmittelbar vor der Bewegungsbahn der Clips (2) einstückig ist.

8. Vorrichtung nach einem der vorgenannten Patentansprüche, **dadurch gekennzeichnet, dass** sie Mittel (5b) zur Erzeugung eines Luftstroms im Luftkanal (1a, 4a, 5a) umfasst.

9. Clipmaschine mit einer Vorrichtung nach einem der vorstehenden Patentansprüche.

10. Clipmaschine nach Anspruch 9 mit einer Transporteinheit 3 für Clips.

## Claims

1. Device for feeding loops (6) and clips (2) to the movement path for clips (2) of a clipping machine comprising a magazine bar (1), the outer wall of which is dimensioned such that it can have the legs of the clips (2) engaged over it, such that the clips (2) can be guided thereon in a manner arranged in a row, means for fixing the angular position of the clips in planes perpendicular to the course of the magazine bar, and an air duct (1a, 4a, 5a) for transporting the loops (6), and **characterized in that** the air duct (1a, 4a, 5a) extends inside the magazine bar (1) at least in the duct portion (1a) immediately upstream of the movement path for clips (2).

2. Device according to Claim 1, **characterized in that,** in said duct portion (1a), at least a part of the cross section of the air duct (1a) is located in a region of the cross section of the magazine bar (1) which can be located between the legs of clips (2) arranged in a row.

3. Device according to Claim 1, **characterized in that,** in said duct portion, at least half of the cross section of the air duct (1a) is located in a region of the cross section of the magazine bar (1) which can be located between the legs of clips (2) arranged in a row.

4. Device according to Claim 1, **characterized in that,** in said duct portion, the entire cross section of the air duct (1a) is located in a region of the cross section of the magazine bar (1) which can be located between the legs of clips (2) arranged in a row.

5. Device according to one of the preceding claims, **characterized in that** the cross section of the air duct (1a, 4a, 5a) is circular at least in a portion of the duct (1a, 4a, 5a).

6. Device according to one of the preceding claims, **characterized in that** the magazine bar (1) is in one piece at least in one portion.

7. Device according to Claim 6, **characterized in that** at least the portion of the magazine bar (1) immediately upstream of the movement path of the clips (2) is in one piece.

8. Device according to one of the preceding claims, **characterized in that** it comprises means (5b) for generating an airflow in the air duct (1a, 4a, 5a).

9. Clipping machine having a device according to one of the preceding claims.

10. Clipping machine according to Claim 9, having a transport unit 3 for clips.

## Revendications

1. Dispositif de conduite de boucles (6) et de clips (2) vers la trajectoire de déplacement pour clips (2) d'une machine de clips comprenant une barre de magasin (1) dont la paroi extérieure est dimensionnée de telle sorte qu'elle peut être chevauchée par les branches des clips (2) de telle sorte que les clips (2) peuvent ensuite être conduits de façon alignée, des moyens pour l'immobilisation de la position angulaire des clips dans des plans perpendiculaires à la barre de magasin, ainsi qu'un conduit d'air (1a, 4a, 5a) pour le transport des boucles (6), ainsi que **caractérisé en ce que** le conduit d'air (1a, 4a, 5a), au moins dans le tronçon de conduit (1a), est situé immédiatement avant la trajectoire de déplacement pour clips (2) à l'intérieur de la barre de magasin (1).

2. Dispositif selon la revendication 1, **caractérisé en ce que,** dans ledit tronçon de conduit (1a), au moins une partie de la section transversale du conduit d'air (1a) se trouve dans une zone de la section transversalede la barre de magasin (1) qui peut se trouver entre les branches de clips (2) alignés.

3. Dispositif selon la revendication 1, **caractérisé en ce que,** dans ledit tronçon de conduit, au moins la moitié de la section transversaledu tronçon de conduit (1a) se trouve dans une zone de la section transversalede la barre de magasin(1) qui peut se trouver entre les branches de clips (2) alignés.

4. Dispositif selon la revendication 1, **caractérisé en ce que,** dans ledit tronçon de conduit, la totalité de la section transversaledu tronçon de conduit (1a) se trouve dans une zone de la section transversalede la barre de magasin (1) qui peut se trouver entre les branches de clips (2) alignés.

5. Dispositif selon l'une des revendications précitées, **caractérisé en ce que** la section transversaledu conduit d'air (1a, 4a, 5a) est circulaire au moins dans un tronçon du conduit (1a, 4a, 5a).

6. Dispositif selon l'une des revendications précitées, **caractérisé en ce que** la barre de magasin (1) est d'une seule pièce au moins dans un tronçon.

7. Dispositif selon la revendication 6, **caractérisé en ce qu**'au moins le tronçon de la barre de magasin (1) est d'une seule pièce immédiatement avant la trajectoire de déplacement des clips (2).

8. Dispositif selon l'une des revendications précitées, **caractérisé en ce qu**'il comprend des moyens (5b) pour la production d'un flux d'air dans le conduit d'air (1a, 4a, 5a).

9. Machine de clips avec un dispositif selon l'une des revendications précitées.

10. Machine de clips selon la revendication 9 avec une unité de transport 3 pour clips.
